# EUROPEAN PATENT APPLICATION

(11) **EP 4 749 792 A1**
(43) Date of publication of application: **27.05.2026**
(21) Application number: 25762226.6
(22) Date of filing: 24.02.2025
(51) Int. Cl.: H01M 50/258, H01M 10/6556, H01M 50/24

(54) **BATTERY DEVICE**

(30) Priority: 29.02.2024 KR 20240029865
(71) Applicant: LG Energy Solution, Ltd., Seoul 07335 (KR)
(72) Inventor: LEE, Yoonhee, Daejeon 34122 (KR); HONG, Minseok, Daejeon 34122 (KR); LEE, Bumhyun, Daejeon 34122 (KR)
(74) Representative: Plasseraud IP
(86) International application number: PCT/KR2025/002565
(87) International publication number: WO 2025/183423

(57) **Abstract**

Provided is a battery device comprising: a plurality of pack housings including a first pack housing and a second pack housing, each of which accommodates a cell assembly including a plurality of battery cells, and which are stacked in one direction; and an upper cover which covers the upper portion of the pack housing disposed at the uppermost end among the plurality of pack housings, wherein: each of the first pack housing and the second pack housing comprises: a lower frame in which the cell assembly is seated; and a plurality of side frames connected to the lower frame to protect the side surface of the cell assembly: at least one of the plurality of side frames comprises: a body part disposed to face the side surface of the cell assembly; and a first upper flange and a first lower flange disposed at both ends of the body part in the height direction; and the first lower flange of the first pack housing and the first upper flange of the second pack housing are coupled to each other with the lower frame of the first pack housing therebetween.

## Description

### Technical Field

The present disclosure relates to a battery device in which a plurality of battery packs is stacked.

### Background Art

Since being rechargeable and dischargeable, a secondary battery is widely used in a mobile device such as a digital camera, a mobile phone, and a laptop computer. Particularly, the secondary battery is spotlighted as an energy source for an electric vehicle, an energy storage system (ESS), or the like.

As large capacity and high output of power are required for the electric vehicle and the energy storage system, a large-capacity battery device of which a plurality of battery modules or battery packs receiving multiple secondary batteries (battery cells) in a housing is connected is widely used.

Particularly, in a case of a large vehicle such as a commercial vehicle, as a large-capacity energy source for long-distance operation of the vehicle, the battery device of which the plurality of battery packs is connected is applied.

In a case of such a conventional battery device applied to the large vehicle, multiple battery packs each has been fixed to the vehicle and electrically connected to each other, so that the entire battery device has been configured.

In this case, a complicated fixation device has been required in order to fix each of the battery packs, and since a space between the battery packs has occurred, a decrease in energy density per unit volume of the battery device has been caused.

### Content of the Invention

### Technical Goals

The present disclosure is proposed to overcome at least a portion of the above-described difficulty of the related art. With respect to a battery device formed with multiple battery packs, an aspect provides the battery device having high energy density by reducing a wasted space between the battery packs.

Another aspect also provides a battery device having a structure in which multiple battery packs are quickly and stably stacked and coupled.

In addition, another aspect is to have or maintain performance of sealing between two stacked battery packs.

### Technical solutions

In order to achieve the above-described goals, according to example embodiments of the present disclosure, there is provided a battery device including a plurality of pack housings including a first pack housing and a second pack housing stacked in one direction, each of which accommodates a cell assembly including a plurality of battery cells, and an upper cover covering an upper portion of a pack housing disposed at an uppermost end among the plurality of pack housings, and each of the first pack housing and the second pack housing includes a lower frame on which the cell assembly is seated, and a plurality of side frames connected to the lower frame and configured to protect a side surface of the cell assembly, at least one of the plurality of side frames includes a body portion disposed to face the side surface of the cell assembly, and an upper flange and a lower flange that are disposed at both end portions of the body portion in the height direction thereof, and the lower flange of the first pack housing and the upper flange of the second pack housing are coupled to each other with the lower frame of the first pack housing therebetween.

The lower flange of the first pack housing and the upper flange of the second pack housing may be coupled to each other through a first coupling assembly, and the first coupling assembly may include a first nut fixed to one of the first pack housing and the second pack housing, and a first bolt fastened to the first nut by penetrating another one of the first pack housing and the second pack housing.

The lower frame of the first pack housing may include a through hole through which the first bolt passes.

The first nut may be provided in a blind rivet nut type and coupled to the upper flange of the second pack housing, and an upper surface of the first nut may be in contact with the lower frame of the first pack housing.

The upper flange of the second pack housing may include a seating part on which the lower frame of the first pack housing is seated, a support part connected to each of the seating part and the body portion and configured to support the seating part, and a hollow portion formed between the seating part and the support part, and the support part may have a slope inclined with respect to the one direction.

The lower frame of the first pack housing may include a first plate on which the cell assembly is seated, a second plate seated on the seating part of the second pack housing, and a third plate disposed between the first plate and the second plate to form a cooling flow path.

The second plate of the second pack housing may be configured to seal an inner space of the first pack housing by covering an upper portion of the first pack housing.

The battery device may further include a guide assembly configured to guide a relative position of the first pack housing and the second pack housing, and the guide assembly may include a plurality of guide pins fixed to one of the first pack housing and the second pack housing, and a plurality of guide holes disposed to another one of the first pack housing and the second pack housing.

At least one of the plurality of guide holes may have a slot structure extended in a direction in which the plurality of guide pins faces each other.

The plurality of guide pins may include a guide support part that is fit between the first pack housing and the second pack housing, a pin body protruding from the guide support part and inserted into one of the plurality of guide holes, and a guide head portion connected to the guide support part and received to a hollow portion provided to one of the first pack housing and the second pack housing.

The battery device may further include a second nut coupled to at least one of the plurality of side frames, and a second bolt inserted into the second nut to fix the battery device to an external structure.

An insertion direction of the second bolt may be perpendicular to a stacking direction of the first pack housing and the second pack housing.

The second nut may be coupled to at least one of the upper flange and the lower flange of the plurality of side frames.

The battery device may further include a sealing member disposed along an upper surface of at least one of the plurality of side frames to seal a gap between the first pack housing and the second pack housing.

The upper flange further may include a blocking part protruding in the height direction of the body portion, and the sealing member is disposed inward of the blocking part, and at least a portion of an area of the sealing member may overlap the body portion in the height direction.

### Effects of the Invention

According to example embodiments, with respect to a battery device formed with multiple battery packs, it is possible to implement the battery device having high energy density by reducing a wasted space between the battery packs.

According to example embodiments, it is possible to provide a battery device having a structure in which multiple battery packs are quickly and stably stacked and coupled.

### Brief Description of Drawings

FIG. 1 is a perspective diagram of a battery device.
FIG. 2 is an example exploded perspective diagram of a battery device.
FIG. 3 is an exploded perspective diagram of a battery pack.
FIG. 4 is an exploded perspective diagram of a lower frame of a battery pack.
FIG. 5 is an example cross-sectional diagram of section I-I' of FIG. 1.
FIG. 6 is an example exploded perspective diagram of a battery device.
FIG. 7 is a reference diagram for describing a guide assembly of a battery device.
FIG. 8 is an example cross-sectional diagram of section II-II' of FIG. 1.
FIG. 9 illustrates a state in which a battery device is mounted to a vehicle.
FIG. 10 is an example cross-sectional diagram of section I-I' of FIG. 1.

### Best Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Thus, since example embodiments described in the present disclosure and configurations illustrated in the accompanying drawings are merely most desirable example embodiments and do not represent all of the technical spirit of the present disclosure, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example embodiments of the present disclosure will be described with reference to the accompanying drawings. However, the idea of the present disclosure is not limited to the proposed example embodiments. For example, those skilled in the art who understand the idea of the present disclosure may propose another example embodiment included in the scope of the idea of the present disclosure through addition, change, removal, or the like of an element. However, the other example embodiment is also included in the scope of the idea of the present disclosure. Shapes, sizes, or the like of elements in the drawings may be exaggerated for clearer description.

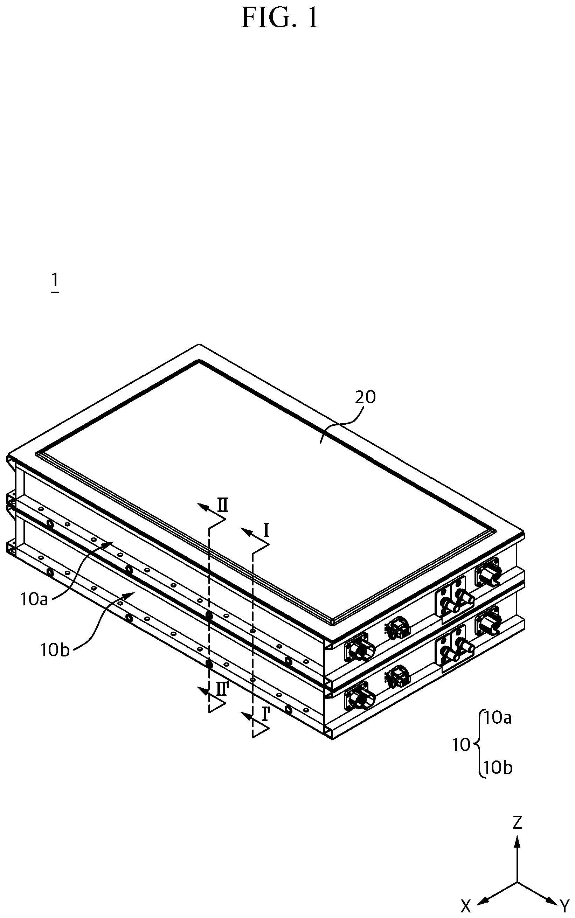

FIG. 1 is a perspective diagram of a battery device 1.

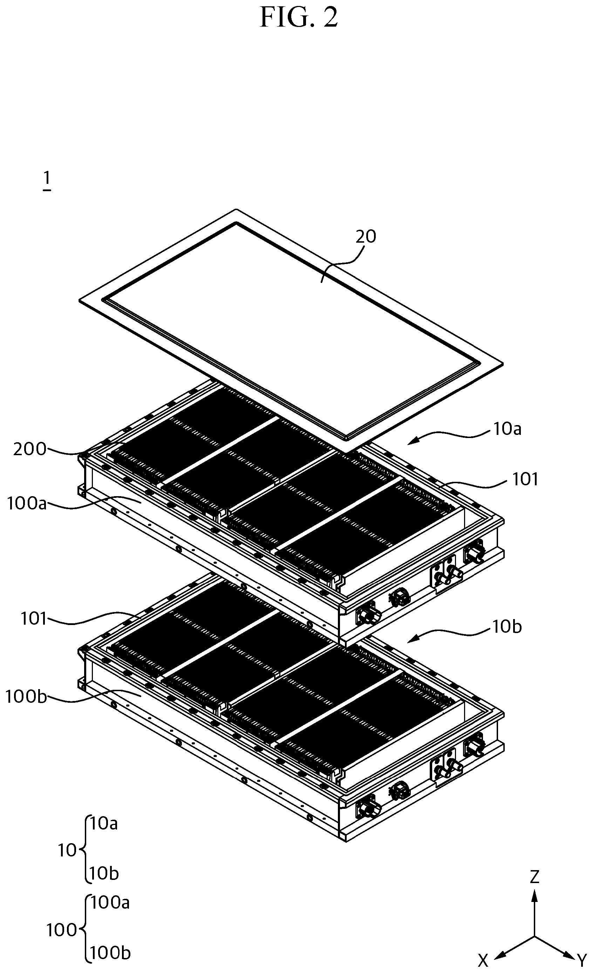

FIG. 2 is an example exploded perspective diagram of the battery device 1.

Referring to FIGS. 1 and 2, the battery device 1 according to example embodiments may include a plurality of battery packs 10 stacked in one direction (e.g., a Z-axis direction) and an upper cover 20 coupled to an uppermost battery pack 10.

Each of the battery packs 10 may include a cell assembly 200 including a plurality of battery cells and a pack housing 100 that receives the cell assembly 200.

All the battery packs 10 which forms the battery device 1 may have an identical structure. In other words, a user (or manufacturer) may determine the number of the battery packs 10 depending on a required amount of power or a required size, and the plurality of battery packs 10 may be stacked and coupled, so that the entire battery device 1 may be implemented.

However, as required, the battery device 1 may be formed as various types of battery packs 10 having different structures are stacked. For example, in order to improve structural stability of the battery device 1, some battery packs among the plurality of battery packs 10 may have a structure having higher rigidity when compared to another battery pack.

Referring to FIGS. 1 and 2, the plurality of battery packs 10 may include a first battery pack 10a and a second battery pack 10b that are stacked and coupled. As described above, the first battery pack 10a and the second battery pack 10b may have an identical structure.

The battery device 1 which is illustrated in FIGS. 1 and 2 has a structure in which two battery packs 10 are stacked, but the number of the battery packs 10 included in the battery device 1 is not limited to an illustration in the drawings. For example, the battery device 1 may include three or more battery packs 10 stacked in one direction.

In a battery pack 10 forming the battery device 1, the pack housing 100 may have a structure in which an upper portion is opened. The opened upper portion of the pack housing 100 may be blocked by a pack housing 100 of another battery pack 10 stacked thereon.

For example, referring to FIG. 2, a second pack housing 100b of the second battery pack 10b may be provided in a structure in which an inner space is opened upward without an additional cover member that covers the inner space. As such, the inner space of the second pack housing 100b, which is opened upward, may be closed by a first pack housing 100a of the first battery pack 10a which is stacked on the second battery pack 10b. In other words, as the first pack housing 100a is stacked on the second pack housing 100b, a lower surface of the first pack housing 100a may be in tight contact with an upper portion of the second pack housing 100b to close the inner space of the second pack housing 100b.

As such, as the plurality of battery packs 10 is stacked and coupled, one battery pack 10 may close an inner space of a battery pack 10 disposed thereunder, so that an additional cover member that covers an inner space of the pack housing 100 may be omitted for each of the battery pack 10.

Meanwhile, in the battery device 1, an inner space of the uppermost battery pack 10 may be closed by the upper cover 20.

According to such a stacking structure, since a structure of the battery device 1 may be simplified, and since multiple battery packs 10 may be coupled to each other further tightly, energy density of the battery device 1 may be increased.

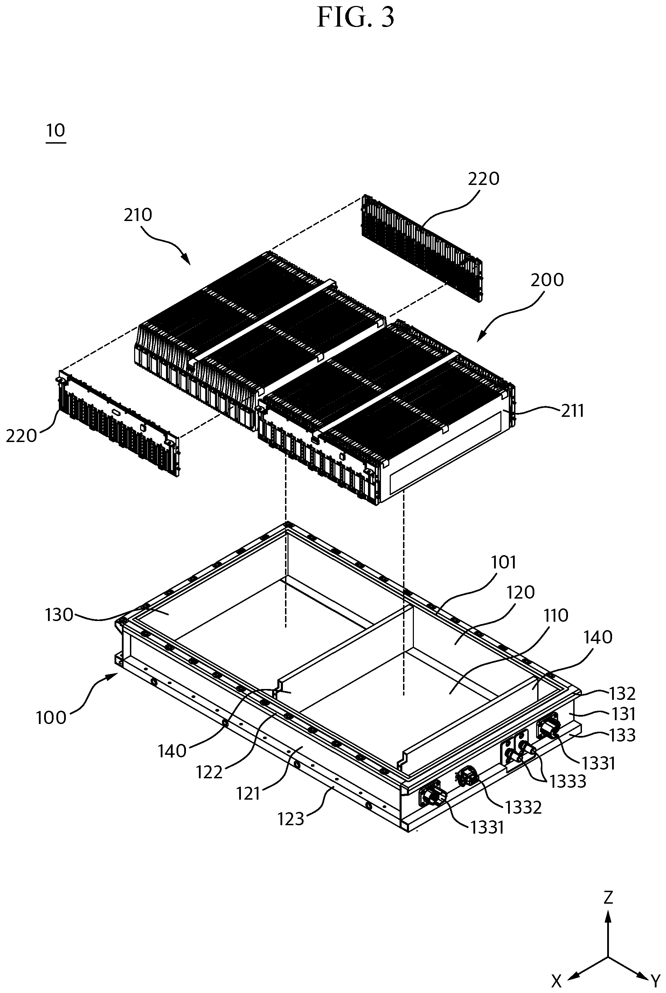

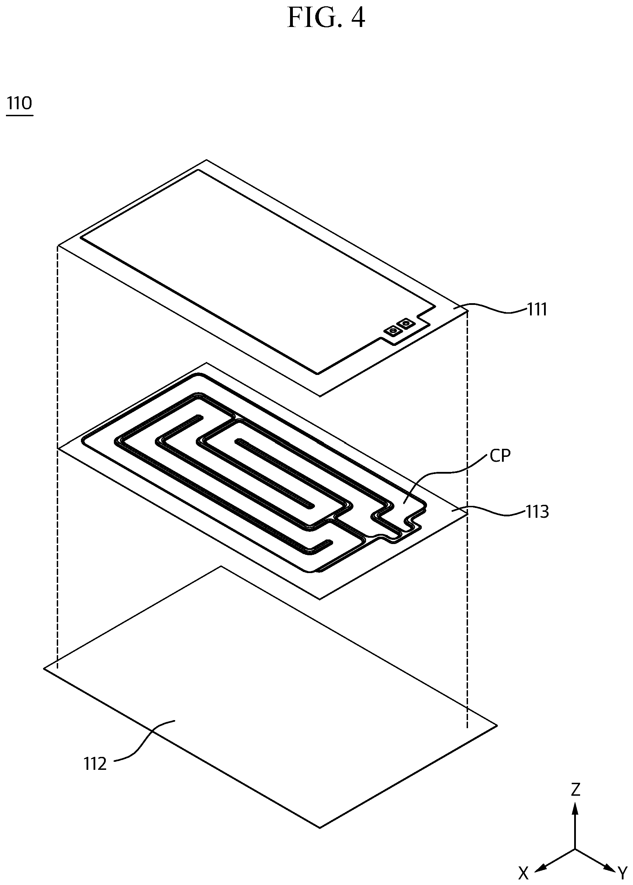

Hereinafter, the battery pack 10 forming the battery device 1 according to example embodiments will be described in detail with reference to FIGS. 3 and 4.

FIG. 3 is an exploded perspective diagram of the battery pack 10.

FIG. 4 is an exploded perspective diagram of a lower frame of the battery pack 10.

Since the battery pack 10 which is described with reference to FIGS. 3 and 4 corresponds to one of the plurality of battery packs 10 which is described above with reference to FIGS. 1 and 2, redundant descriptions similar to those of FIGS. 1 and 2 may be omitted.

The battery pack 10 included in the battery device 1 according to example embodiments may include the cell assembly 200 into which a plurality of battery cells 211 is gathered and the pack housing 100 to which the cell assembly 200 is received.

The cell assembly 200 may include the plurality of battery cells 211 which is electrically connected to each other. For example, referring to FIG. 3, the cell assembly 200 may include a cell stack 210 in which the plurality of battery cells 211 is stacked and a busbar assembly 220 that electrically connects the plurality of battery cells 211 to each other.

In one cell stack 210, the plurality of battery cells 211 may be disposed to be stacked in one direction. For example, referring to FIG. 3, the plurality of battery cells 211 may be stacked in a direction (e.g., a Y-axis direction) perpendicular to a height direction (namely, a Z-axis direction) of the pack housing 100 to form the cell stack 210.

A battery cell 211 forming the cell stack 210 may be a pouch-type secondary battery having a structure in which an electrode assembly is received in a pouch. In the pouch-type secondary battery, the electrode assembly and an electrolyte may be received in the pouch which is formed by forming one or a plurality of exterior materials. However, the battery cell 211 of the cell assembly 200 according to example embodiments is not limited to the pouch-type secondary battery. For example, the battery cell 211 may be formed as a prismatic cell or a cylindrical cell.

Although not illustrated in detail in the drawings, the cell stack 210 may further include a cell protection member for protecting the plurality of battery cells 211. For example, the cell protection member may be a surface pressure pad for applying a predetermined surface pressure to the battery cell 211 so that the battery cell 211 is prevented from swelling in a process of recharging and discharging. Alternatively, the cell protection member may be a heat insulation sheet for preventing high-temperature thermal energy or a flame generated in one battery cell 211 from spreading to another element.

The plurality of battery cells 211 of the cell stack 210 may be electrically connected to each other by the busbar assembly 220. The busbar assembly 220 may include a plurality of conductive busbars electrically connected to the battery cell 211 and a busbar frame supporting a conductive busbar.

The busbar assembly 220 may face at least one side of the cell stack 210. For example, referring to FIG. 3, a pair of busbar assemblies 220 may be provided, and each thereof may be disposed to face the cell stack 210 in a length direction of the battery cell 211 (namely, an X-axis direction).

Meanwhile, the cell assembly 200 may further include an insulation cover disposed between the busbar assembly 220 and the pack housing 100. The insulation cover may serve to protect the busbar assembly 220 and prevent a short circuit between a busbar and the pack housing 100.

In example embodiments, the cell assembly 200 may be directly received to the pack housing 100 without an additional module case surrounding the cell assembly 200. According to such a cell to pack (CTP)-type structure, a space occupied by a conventional module case, an assembly tolerance for seating a module case, or the like may be removed. Also, since a larger number of battery cells or a larger battery cell equivalent to the removed space may be disposed, energy density of the battery pack 10 may be increased.

A plurality of cell assemblies 200 may be received to the pack housing 100. The pack housing 100 may include a lower frame 110 on which the cell assembly 200 is seated and a first side frame 120 and a second side frame 130 that are coupled to the lower frame 110 to form a side surface of the pack housing 100.

The lower frame 110 may be formed as a plurality of plates coupled to each other. For example, referring to FIGS. 3 and 4 together, the lower frame 110 may include a first plate 111 on which the cell assembly 200 is seated, a second plate 112 forming a lowermost surface of the pack housing 100, and a third plate 113 disposed between the first plate 111 and the second plate 112 to form a cooling flow path CP.

The cooling flow path CP may be a passage in which a refrigerant may flow. The refrigerant may flow into the cooling flow path CP formed by the third plate 113 through a cooling port 1333 provided to a side of the pack housing 100. The refrigerant may be discharged to an outside of the pack housing 100 through the cooling port 1333 after cooling the plurality of cell assemblies 200 while flowing along the cooling flow path CP.

The plates which form the lower frame 110 may be provided in different sizes. For example, while provided to have an area larger than an area of the first plate 111, the second plate 112 which corresponds to the lowermost surface of the pack housing 100 may be provided so that the area thereof is sufficiently large to a degree to which side frames 120 and 130 may be coupled to an upper surface thereof. According to such a structure, since a lower surface of the battery pack 10 is finished by a single member (namely, the second plate 112) without a join between different members, permeation of a foreign substance or moisture through the lower surface of the battery pack 10 may be effectively prevented while the cell assembly 200 may be stably supported.

A plurality of side frames 120 and 130 may be disposed above the lower frame 110. For example, referring to FIG. 3, the plurality of side frames 120 and 130 may include the first side frame 120 and the second side frame 130 which are in contact with each other to form different side surfaces of the pack housing 100.

The plurality of side frames 120 and 130 may protect a side surface of the cell assembly 200 and provide rigidity in the height direction of the pack housing 100 (namely, the Z-axis direction). In addition, the plurality of side frames 120 and 130 may be used as a coupling region for coupling between the plurality of battery packs 10 which forms the battery device 1.

To this end, one side frame 120 or 130 may include a body portion 121 or 131 forming a body of the side frame 120 or 130 and include an upper flange 122 or 132 and a lower flange 123 or 133 that are disposed at both end portions of the body portion 121 or 131 in a height direction (namely, the Z-axis direction).

For example, referring to FIG. 3, the first side frame 120 may include a first body portion 121 and include a first upper flange 122 and a first lower flange 123 that are disposed at both end portions of the first body portion 121 in a height direction (namely, the Z-axis direction). For example, referring to FIG. 3, the second side frame 130 may include a second body portion 131 and include a second upper flange 132 and a second lower flange 133 that are disposed at both end portions of the second body portion 131 in a height direction (namely, the Z-axis direction).

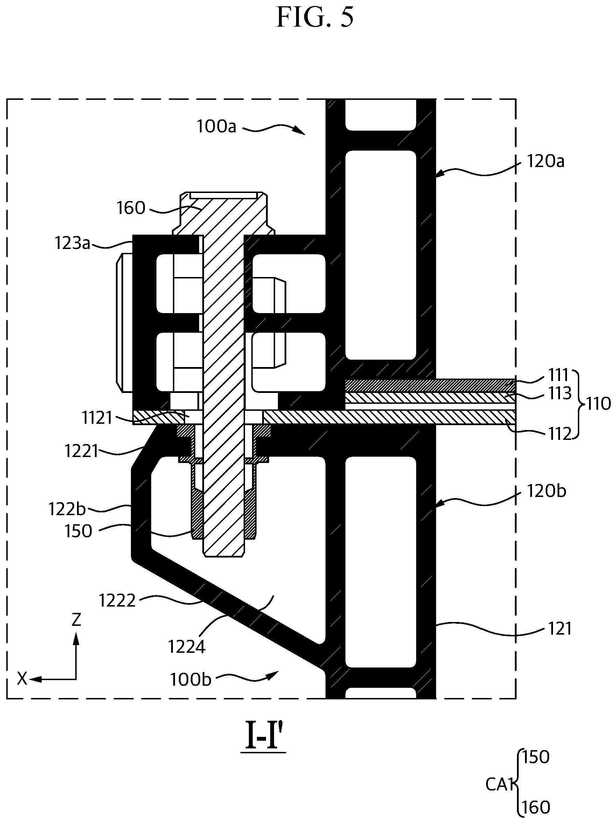

The plurality of battery packs 10 may be coupled to each other through at least a portion of upper flanges 122 and 132 and lower flanges 123 and 133 of the plurality of side frames 120 and 130 which is provided to each of the battery packs 10. Such a coupling structure will be described below with reference to FIG. 5.

Referring to FIG. 3, a power port 1331, a signal port 1332, and the cooling port 1333 may be disposed to one of the side frames 120 and 130. However, positions of the power port 1331, the signal port 1332, and the cooling port 1333 are not limited to an illustration in the drawings and may be appropriately changed as required.

Meanwhile, the pack housing 100 may further include one or more cross frames 140 disposed on an upper surface of the lower frame 110 to divide an inner space of the pack housing 100.

A cross frame 140 may be connected to the lower frame 110. For example, the cross frame 140 may be disposed to cross the upper surface of the lower frame 110 between the side frames 120 and 130.

The cross frame 140 may divide the inner space of the pack housing 100 into a plurality of receiving spaces. One or more cell assemblies 200 or a control module (not illustrated) that controls the cell assembly 200 may be disposed in each receiving space divided by the cross frame 140.

At least one of the lower frame 110, the side frames 120 and 130, and the cross frame 140 which form the pack housing 100 may be formed of a metallic material having high rigidity for protecting the battery cell 211 and securing structural stability of the battery device 1. For example, at least a portion of the lower frame 110 and the side frames 120 and 130 may be formed of aluminum or an alloy including aluminum.

Hereinafter, a fastening structure between pack housings 100 will be described in detail with reference to FIG. 5.

FIG. 5 is an example cross-sectional diagram of section I-I' of FIG. 1.

Since the battery pack 10 and the battery device 1 which are described with reference to FIG. 5 correspond to the battery pack 10 and the battery device 1 which are described with reference to FIGS. 1 through 4, redundant descriptions may be omitted.

The plurality of battery packs 10 (of FIGS. 1 through 3) which is included in the battery device 1 (of FIGS. 1 and 2) according to example embodiments may be coupled to each other through at least one of the side frames 120 and 130 (of FIG. 3) of the pack housing 100.

Referring to FIG. 5, a pack housing (hereinafter referred to as the first pack housing 100a) of the first battery pack 10a (of FIGS. 1 and 2) and a pack housing (hereinafter referred to as the second pack housing 100b) of the second battery pack 10b (of FIGS. 1 and 2) may be disposed to be stacked in a height direction (namely, a Z-axis direction), and a first side frame 120a of the first pack housing 100a and a first side frame 120b of the second pack housing 100b may be coupled through a first coupling assembly CA1.

The first coupling assembly CA1 may include a first nut 150 fixed to one of the first pack housing 100 and the second pack housing 100b and a first bolt 160 fastened to the first nut 150 by penetrating another one of the first pack housing 100a and the second pack housing 100b.

For example, referring to FIG. 5, the first nut 150 may be fixed to an upper flange 122b of the second pack housing 100b, and the first bolt 160 may be fastened to the first nut 150 by penetrating a lower flange 123a of the first pack housing 100a. Accordingly, the lower flange 123a of the first pack housing 100a and the upper flange 122b of the second pack housing 100b may be securely fixed to each other through the first coupling assembly CA1.

Each of the first pack housing 100a and the second pack housing 100b has a structure of which a lowermost surface is finished as the lower frame 110. In this case, as the first pack housing 100a and the second pack housing 100b are stacked, at least one of a plurality of plates 111, 112, and 113 forming the lower frame 110 of the first pack housing 100a may be disposed between the side frame 120a of the first pack housing 100a and the side frame 120b of the second pack housing 100b.

The first bolt 160 may be fastened to the first nut 150 by penetrating at least one of the plurality of plates 111, 112, and 113 forming the lower frame 110 of the first pack housing 100a. To this end, a through hole 1121 through which the first bolt 160 may pass may be provided to the lower frame 110.

The lower frame 110 may be interposed between side frames 120a and 120b of vertically stacked pack housings 100a and 100b to fill a gap between the side frames 120a and 120b, so that quality of sealing of the inner space of the pack housing 100 and airtightness of the battery device 1 may be further increased.

Also, according to such a coupling structure, since the side frames 120a and 120b and the lower frame 110 may be alternately disposed in a height direction of the battery device 1 (namely, the Z-axis direction) and securely fixed to each other by the first coupling assembly CA1, multiple cell assemblies 200 may be stably supported, and structural stability of the entire battery device 1 may be greatly increased.

In order to stably support another pack housing 100 disposed above, the upper flanges 122 and 132 (of FIG. 3) of the pack housing 100 may be provided in a structure that may sufficiently endure a load in a height direction.

Referring to FIG. 5, the upper flange 122b of the second pack housing 100b may include a seating part 1221, on which the other pack housing 100 or the upper cover 20 may be seated, and a support part 1222, which is connected to each of the seating part 1221 and the body portion 121 to support the seating part 1221. A hollow portion 1224 is formed between the seating part 1221 and the support part 1222. Due to such a hollow structure, the upper flange 122b may endure a load while having a light structure.

In order to increase structural stability of the upper flange 122b, the support part 1222 may have a slope inclined from a stacking direction of the plurality of battery packs 10. For example, referring to FIG. 5, the slope of the support part 1222 may be a portion that obliquely continues from an end portion of the seating part 1221 to the body portion 121. Accordingly, the seating part 1221, the support part 1222, and the body portion 121 may form the hollow portion 1224 which has a trapezoid shape.

As a slope structure is formed to the support part 1222 of the upper flange, a load applied in the stacking direction (e.g., the Z-axis direction) may be sufficiently endured compared to a case in which a structure that protrudes in a direction (e.g., an X-axis direction) perpendicular to the body portion 121 exists alone (e.g., the seating part 1221).

Meanwhile, the upper flange 122b of the second pack housing 100b is described as a reference for FIG. 5, but the above-mentioned structure may be identically applied to an upper flange of another pack housing 100 including the first pack housing 100a.

Meanwhile, in example embodiments, the first nut 150 may be provided in a blind rivet nut type. In this case, after a portion of the first nut 150 may be inserted into the hollow portion 1224 of the upper flange 122b, the inserted portion may be deformed by applying force. Through this, the first nut 150 may be securely fixed to the upper flange 122. When the first nut 150 is formed in the blind rivet nut type as such, a fastening operation may be easily performed in a narrow area of the seating part 1221 of the upper flange 122b.

An upper surface of the first nut 150 is disposed to be in contact with at least a portion of the lower frame 110 of the first pack housing 100a. Accordingly, an upper surface of the seating part 1221 of the second pack housing 100b and the upper surface of the first nut 150 may have a structure continuing on an identical plane, so that a load applied from the first pack housing 100a may be further equally distributed.

Meanwhile, FIG. 5 illustrates a coupling structure between first side frames 120a and 120b of the pack housings 100a and 100b in a vertical direction, but such a coupling structure may be identically applied to a coupling structure between second side frames 130 (of FIG. 3) of the pack housings 100a and 100b in the vertical direction.

That is, as required, in the plurality of battery packs 10, a coupling structure of the first coupling assembly CA1 may be formed between the second side frames 130 as well as first side frames 120. In this case, a description with reference to FIG. 5 may be referenced for the coupling structure between the second side frames 130 in the vertical direction.

Meanwhile, the battery pack 10 according to example embodiments may further include a guide assembly for accurately and promptly stacking the plurality of battery packs 10.

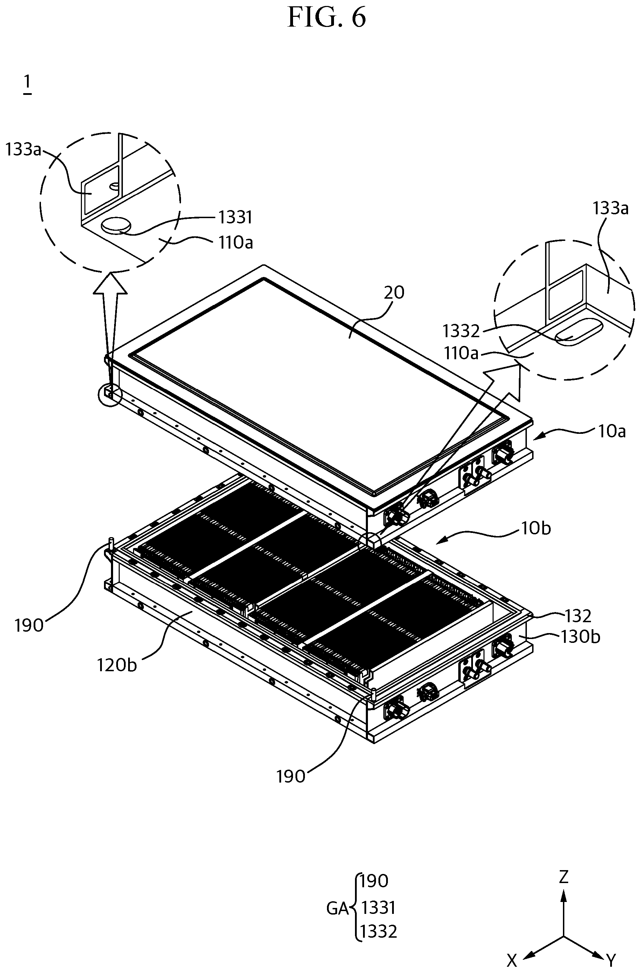

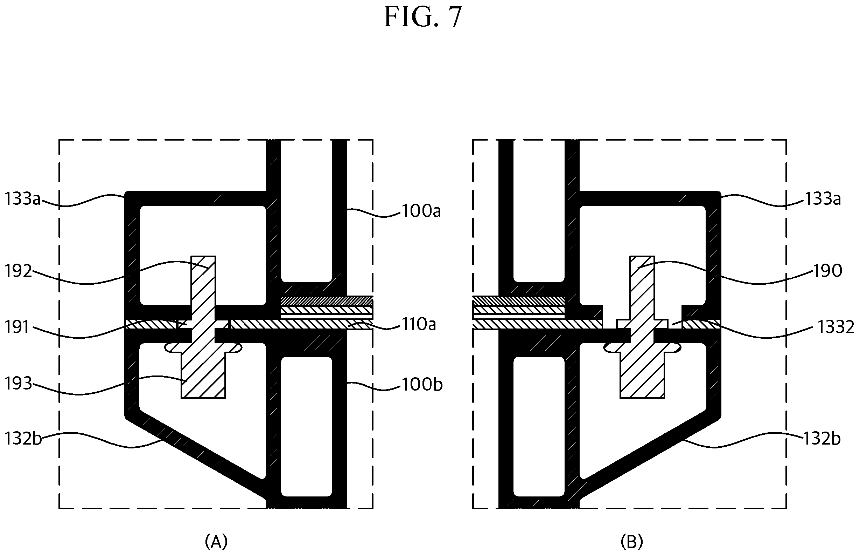

Hereinafter, the guide assembly for accurately stacking and coupling the battery packs 10 will be described with reference to FIGS. 6 and 7.

FIG. 6 is an example exploded perspective diagram of the battery device 1.

FIG. 7 is a reference diagram for describing a guide assembly of the battery device 1.

Since the battery pack 10 and the battery device 1 which are described with reference to FIGS. 6 and 7 include technical characteristics of the battery pack 10 and the battery device 1 which are described with reference to FIGS. 1 through 5, redundant descriptions may be omitted.

The battery device 1 may further include a guide assembly GA for guiding a relative position of the plurality of battery packs 10 which is stacked in a height direction (namely, a Z-axis direction).

The guide assembly GA may include a plurality of guide pins 190 fixed to one of the first pack housing 100a and the second pack housing 100b and a plurality of guide holes 1331 and 1332 disposed to another one of the first pack housing 100 and the second pack housing 100b.

Referring to FIG. 6, a guide pin 190 may be disposed to at least one of side frames 120b and 130b of a lower battery pack 10b among two or more stacked battery packs 10. For example, two guide pins 190 may be disposed to the upper flange 132 of a second side frame 130b of the second pack housing 100b, and the guide holes 1331 and 1332 into which the guide pins 190 are individually inserted may be provided to a lower surface of the first pack housing 100a. However, a position of the guide pin 190 is not limited to an illustration in the drawings, and the guide pin 190 may be disposed to the first side frame 120b of the second pack housing 100b as required.

Referring to FIG. 7, the guide pin 190 may include a guide support part 191 that is fit between the first pack housing 100a and the second pack housing 100b, a pin body 192 protruding from the guide support part 191 and inserted into one of the plurality of guide holes 1331 and 1332, and a guide head portion 193 connected to the guide support part 191 and received to a hollow portion 1321 provided to a side frame of the pack housing 100.

In example embodiments, the guide pin 190 may be provided in a blind stud type. In other words, after the guide head portion of the guide pin 190 is inserted into the hollow portion 1224, the guide head portion 193 may be deformed by applying force. Through this, the guide pin 190 may be securely fixed to an upper flange 132b. When the guide pin 190 is formed in the blind stud type as such, a fastening operation may be easily performed in a narrow area of an upper surface of the upper flange 132b.

The guide holes 1331 and 1332 are disposed on a lower surface of an upper battery pack 10 among the stacked two or more battery packs 10 and formed so that the guide pin 190 may be inserted therein. For example, referring to FIG. 6, a guide hole 1331 or 1332 may be disposed on the lower surface of the first pack housing 100a to correspond to a position of the guide pin 190 which is coupled to the second pack housing 100b.

The guide holes 1331 and 1332 may include a first guide hole 1331 and a second guide hole 1332 that have different shapes. For example, referring to FIGS. 6 and 7, the first guide hole 1331 may be provided in a size in which the guide pin 190 fits, and the second guide hole 1332 may be provided in a slot structure so that in a state in which the guide pin 190 is inserted, each may move relative to the other. At this point, the second guide hole 1332 may be provided in the slot structure which is extended in a direction in which the plurality of guide pins 190 faces each other (e.g., a Y-axis direction in FIG. 6).

A method of aligning the battery packs 10, which uses the guide assembly GA, is as follows. To begin with, one of the plurality of guide pins 190 is inserted into the second guide hole 1332 having the slot structure. In a state in which the guide pin 190 is inserted into the second guide hole 1332, two pack housings vertically disposed (e.g., the first pack housing 100a and the second pack housing of FIG. 6) may slightly move relative to each other to correspond to a slot shape of the second guide hole 1332. Afterward, positions of the first pack housing 100a and the second pack housing 100b may be appropriately adjusted, so that another guide pin 190 may be inserted into the first guide hole 1331. Accordingly, a relative position of two neighboring battery packs 10 is determined. According to such a guide structure, the plurality of battery packs 10 may be promptly and accurately aligned.

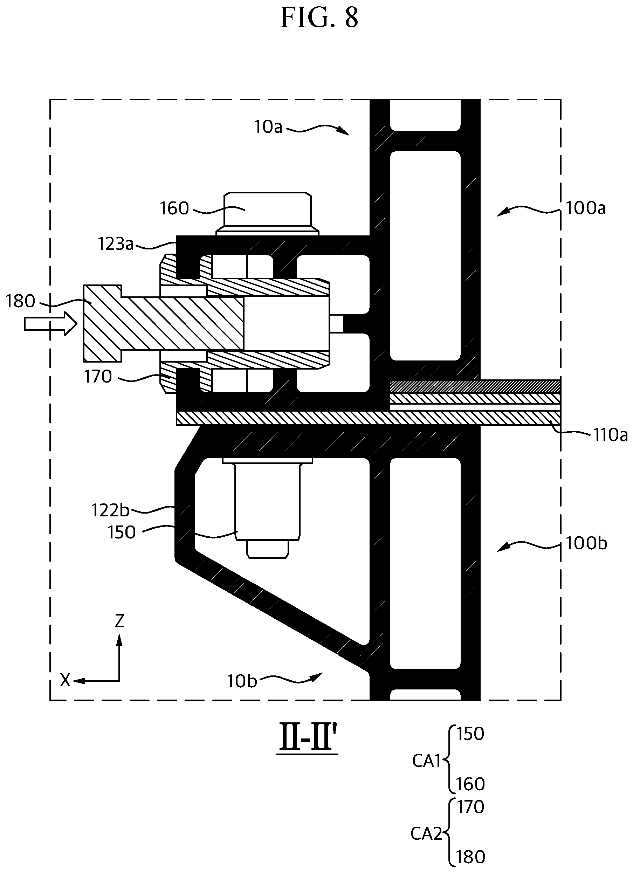

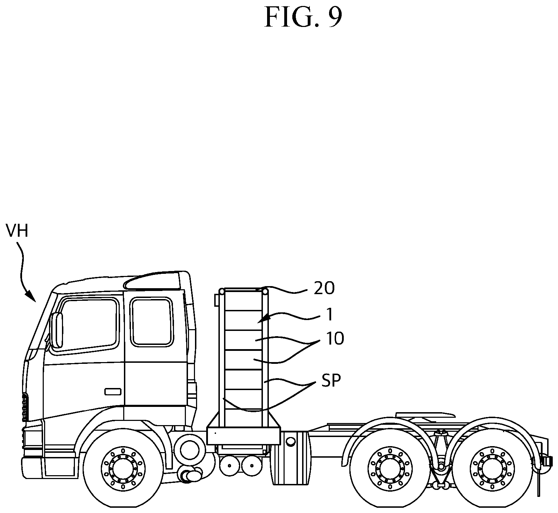

Hereinafter, a second coupling assembly for fixing the battery device 1 to an external structure will be described with reference to FIGS. 8 and 9.

FIG. 8 is an example cross-sectional diagram of section II-II' of FIG. 1.

FIG. 9 illustrates a state in which the battery device 1 is mounted to a vehicle.

Since the battery pack 10 which is described with reference to FIGS. 8 and 9 includes all technical characteristics of the battery pack 10 and the battery device 1 which are described with reference to FIGS. 1 through 7, redundant descriptions may be omitted.

The battery device 1 according to example embodiments may be coupled to an external structure. For example, referring to FIG. 9, the battery device 1 may be coupled to a battery placement part SP provided to a vehicle VH and may be fixed to the vehicle VH.

The battery device 1 may further include a second coupling assembly CA2 for effectively fixing the plurality of battery packs 10 to the external structure. For example, referring to FIG. 8, the second coupling assembly CA2 may include a second nut 170 coupled to the pack housing 100 and a second bolt 180 fastened to the second nut 170.

The second nut 170 may be fixed to at least one of a plurality of side frames (e.g., the plurality of side frames 120 and 130 of FIG. 3) of the pack housing 100. For example, the second nut 170 may be disposed to at least one of the upper flange 122 and the lower flange 123 of the first side frame 120.

The second bolt 180 may be inserted into each of the external structure and the second nut 170, and accordingly, the battery device 1 may be securely fixed to the external structure. For example, the second bolt 180 may be fastened to each of the battery placement part SP of the vehicle VH and the second nut 170 of the battery device 1 to couple the battery device 1 to the vehicle VH.

At this point, a direction of inserting the second bolt 180 into the second nut 170 may be a direction perpendicular to a stacking direction of the plurality of battery packs 10. For example, referring to FIG. 8, the first pack housing 100a and the second pack housing 100b may be stacked in a height direction of the battery device 1 (namely, a Z-axis direction), a nut hole opened in a first direction (e.g., an X-axis direction) perpendicular to the height direction (namely, the Z-axis direction) of the battery device 1 may be provided to the second nut 170, and the second bolt 180 may be inserted into the nut hole in the first direction, so that the external structure and the battery pack 10 may be coupled to each other.

The second nut 170 may be provided in a blind nut type. For example, referring to FIG. 8, after a portion of the second nut 170 is inserted into the lower flange 123a, the portion inserted into the lower flange 123a may be deformed by applying force, so that the second nut 170 may be securely fixed to the lower flange 123a. When the second nut 170 is formed in the blind nut type as such, the second nut 170 may be easily fastened to the lower flange 123a.

Meanwhile, the second coupling assembly CA2 may be disposed between a plurality of first coupling assemblies CA1 in order to avoid interference.

Hereinafter, a sealing structure of the battery device will be described with reference to FIGS. 1, 2, 3, and 10 together.

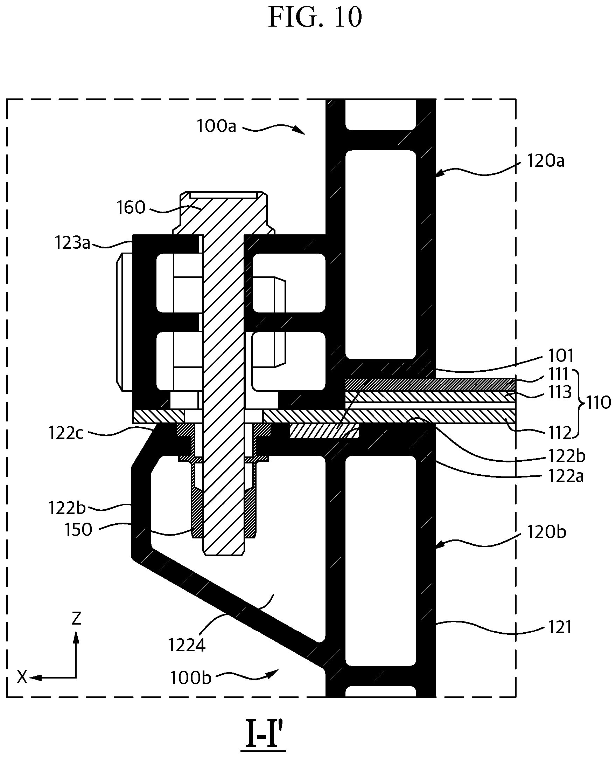

FIG. 10 is an example cross-sectional diagram of section I-I' of FIG. 1.

A battery device which is described with reference to FIG. 10 includes a technical characteristic of the battery device 1 which is described with reference to FIGS. 1 through 9, and redundant descriptions may be omitted.

The battery device according to example embodiments may further include a sealing member 101 for improving performance of sealing between battery packs (e.g., battery packs 10a and 10b of FIGS. 10a and 10b). The sealing member 101 may prevent a flow of moisture or a foreign substance outside the battery device into an inner space of a pack housing by filling a gap that may occur between the battery packs 10a and 10b which are vertically stacked.

The sealing member 101 may be disposed on an upper surface of a side frame of the pack housing (e.g., the pack housing 100 of FIG. 2). For example, referring FIGS. 2 and 10 together, the sealing member 101 may be disposed along an upper surface of at least one of the first side frame 120 and the second side frame 130 which form a side surface of the pack housing 100.

As another pack housing (e.g., the pack housing 100a of FIG. 10) is seated on and coupled to one pack housing (e.g., the pack housing 100b of FIG. 10), an upper surface of the sealing member 101 may be in tight contact with a lower surface of the other pack housing 100a. Accordingly, an inner space of the pack housing 100b which is disposed below may be tightly sealed.

Similarly, the sealing member 101 which is disposed to an uppermost pack housing of the battery device may seal a gap between the uppermost pack housing and the upper cover 20 (of FIGS. 1 and 2).

The sealing member 101 may be formed of a material having predetermined elasticity or restoring force. For example, at least a portion of the sealing member 101 may be formed of a polymer resin material such as rubber or polyurethane form. Alternatively, the sealing member 101 may be provided as a liquid-type gasket including silicon or the like. The sealing member 101 formed of such a material may be deformed so as to correspond to a shape of a gap between the battery packs (e.g., the battery packs 10a and 10b) which are adjacent to each other to be stacked or between the battery pack 10 and the upper cover 20, so that watertightness and airtightness of the battery device may be increased.

The sealing member 101 may be disposed to a sealing groove 122a formed on upper surfaces of the side frames 120 and 130. Referring to FIGS. 3 and 10 together, the sealing groove 122a may be a recessed space, which is provided so that the sealing member 101 may be seated thereon, and may be disposed closer to the inner space of the pack housing (e.g., the pack housing 100b) than a portion to which coupling assemblies 150 and 160 are coupled in the side frame (e.g., the side frame 120b). In consideration of a material characteristic of the sealing member 101, the upper surface thereof may be provided so as to protrude further than an upper boundary of the sealing groove 122a or the upper surfaces of the side frames 120 and 130 by a predetermined thickness before the sealing member 101 is pressed by an upper member.

At least some areas of the sealing groove 122a and the sealing member 101 may overlap body portions 121 and 131 of the side frames 120 and 130 in a height direction of the pack housing (namely, a Z-axis direction). Accordingly, although flange parts 122, 123, 132, and 133 of the side frames 120 and 130 which are vertically stacked are relatively deformed in a process of coupling or using the battery device, the sealing member 101 which is fit between the body portions 121 and 131 may stably fill a gap between the pack housings 100 in a vertical direction, so that quality of sealing of the battery device may be maintained.

In addition, the sealing member 101 may be disposed to be spaced apart from a portion to which the coupling assemblies 150 and 160 are coupled in side frames (e.g., the side frames 120a and 120b of FIG. 10) at a predetermined interval. Accordingly, interference with the sealing member 101 or damage to the sealing member 101 may be prevented in a process of fastening the coupling assemblies 150 and 160.

In example embodiments, the side frame may further include a protruding seating part 122b disposed at a side of the sealing groove 122a. The protruding seating part 122b may be a portion protruding further than a bottom surface of the sealing groove 122a in a height direction (namely, the Z-axis direction) of the side frame (e.g., the side frame 120a or 120b of FIG. 10) and may be in contact with a lower surface of the upper cover 20 or another pack housing seated above the side frames 120a and 120b (of FIG. 10).

The protruding seating part 122b may be disposed to be adjacent to the sealing member 101, may be configured to support a load applied by the upper cover 20 or the other pack housing seated above the side frames 120a and 120b (of FIG. 10) and prevent an excessively large load from being applied to the sealing member 101, and may allow the sealing member 101 to be compressed at an appropriate level.

Meanwhile, a blocking part 122c that blocks an inflow of an outside foreign substance may be provided at an edge of a portion at which the coupling assemblies 150 and 160 are disposed to the side frames (e.g., the side frames 120a and 120b of FIG. 10). For example, referring to FIG. 10, the blocking part 122c may be a portion protruding at an edge of the upper flange 122b in a height direction of the battery pack 10 (namely, the Z-axis direction).

An upper surface of the blocking part 122c may be in tight contact with a lower surface of the upper cover 20 or another pack housing seated above the side frames (e.g., the side frames 120a and 120b of FIG. 10). The blocking part 122c may serve to prevent direct exposure of the sealing member 101, which is disposed at a side inward from the blocking part 122c, to an outside environment of the battery pack 10 as well as primarily blocking the flow of the moisture and the foreign substance outside the battery pack 10 into the pack housing 100. Accordingly, the sealing member 101 may be prevented from being contaminated or damaged, and excellent sealing performance of the sealing member 101 may be maintained for a long time.

In example embodiments, an upper surface of the first nut 150 which forms the coupling assemblies 150 and 160 may be provided to have a height level equal to that of the upper surface of the blocking part 122c. For example, as illustrated in FIG. 10, the upper surface of the first nut 150 and the upper surface of the blocking part 122c may be disposed on an identical plane. Accordingly, while the upper pack housing 100a is stably supported by increasing an area of contact with the upper pack housing 100a, a space between the pack housings 100a and 100b in the vertical direction may be minimized.

Meanwhile, an upper surface of the protruding seating part 122b of the side frame (e.g., the side frame 120a or 120b of FIG. 10) may be also provided to have a height level equal to those of the upper surface of the first nut 150 and the upper surface of the blocking part 122c. As such, portions of a side frame (e.g., the side frame 120a or 120b of FIG.10) of one pack housing, which are in contact with an upper pack housing, may be formed to have an equal height level. Through this, a load applied by the upper pack housing may not be concentrated on a predetermined region of a lower pack housing, and an upper surface of the pack housing may be maximally prevented from being damaged by a concentrated load.

In addition, as the side frame (e.g., the side frame 120a or 120b of FIG. 10), the first nut 150, and the protruding seating part 122b are formed to have an equal height level, the upper pack housing (e.g., the pack housing 100a of FIG. 10) may be maximally in tight contact with the lower pack housing (e.g., the pack housing 100b of FIG. 10), and a uniform load may be applied to various portions of the sealing member 101 which is extended along the upper surface of the side frame (e.g., the side frame 120a or 120b of FIG. 10). Through this, higher sealing performance may be expected.

The battery device 1 according to example embodiments may omit an additional cover member that covers each battery pack 10 and may be configured so that one battery pack 10 covers and seals an upper portion of a battery pack 10 disposed thereunder. Accordingly, in the battery device 1 which is formed with multiple battery packs 10, since a wasted space between the battery packs 10 may be reduced, energy density may be increased.

Also, with respect to coupling between the plurality of battery packs 10 vertically stacked, the side frame 120 or 130 of an upper battery pack 10 and the side frame 120 or 130 of a lower battery pack 10 may be coupled via the coupling assembly CA1, with the lower frame 110 of the upper battery pack 10 interposed therebetween. Through this, quality of sealing of the battery device 1 may be improved while structural stability of the battery device 1 is increased.

Furthermore, the battery device 1 according to example embodiments may be manufactured by stacking multiple standardized battery packs 10, and accordingly, battery devices 1 of various capacities and sizes may be quickly manufactured.

Particularly, since the battery device 1 according to example embodiments has high quality of being sealed and structural stability while having a structure in which the multiple battery packs 10 are integrated, the battery device 1 may be applied to a large electric vehicle including a commercial vehicle that requires a high-capacity energy storage device (e.g., the vehicle VH of FIG. 9).

The various example embodiments of the present disclosure have been described above in detail, but the scope of the present disclosure is not limited thereto. It will be apparent to those skilled in the art that various changes and modifications may be allowed within the range of the technical spirit of the present disclosure. In addition, the above-described example embodiments may be implemented without a portion of elements thereof, and each of the example embodiments may be implemented in combination with another.

### [Description of Reference Numerals]

1... Battery device 10... Battery pack
10a... First battery pack 10b... Second Battery pack
20... Upper cover 100... Pack housing
100a... First pack housing 100b... Second pack housing
110... Lower frame 111... First plate
112... Second plate 113... Third plate
120... First side frame 130... Second side frame
140... Cross frame 200... Cell assembly
210... Cell stack 211... Battery cell
220... Busbar assembly CA1... First coupling assembly
CA2... Second coupling assembly GA... Guide assembly
VH... Vehicle SP... Battery placement part

## Claims

1. A battery device comprising:
a plurality of pack housings comprising a first pack housing and a second pack housing stacked in one direction, each of which accommodates a cell assembly comprising a plurality of battery cells; and
an upper cover covering an upper portion of a pack housing disposed at an uppermost end among the plurality of pack housings,
wherein each of the first pack housing and the second pack housing comprises:
a lower frame on which the cell assembly is seated; and
a plurality of side frames connected to the lower frame and configured to protect a side surface of the cell assembly,
at least one of the plurality of side frames comprises:
a body portion disposed to face the side surface of the cell assembly; and
an upper flange and a lower flange that are disposed at both end portions of the body portion in the height direction thereof, and
the lower flange of the first pack housing and the upper flange of the second pack housing are coupled to each other with the lower frame of the first pack housing therebetween.

2. The battery device of claim 1, wherein the lower flange of the first pack
housing and the upper flange of the second pack housing are coupled to each other through a first coupling assembly, and
the first coupling assembly comprises:
a first nut fixed to one of the first pack housing and the second pack housing; and
a first bolt fastened to the first nut by penetrating another one of the first pack housing and the second pack housing.

3. The battery device of claim 2, wherein the lower frame of the first pack housing comprises a through hole through which the first bolt passes.

4. The battery device of claim 2, wherein the first nut is provided in a blind rivet nut type and coupled to the upper flange of the second pack housing, and
an upper surface of the first nut is in contact with the lower frame of the first pack housing.

5. The battery device of claim 1, wherein the upper flange of the second pack housing comprises:
a seating part on which the lower frame of the first pack housing is seated;
a support part connected to each of the seating part and the body portion and configured to support the seating part; and
a hollow portion formed between the seating part and the support part, and
the support part has a slope inclined with respect to the one direction.

6. The battery device of claim 5, wherein the lower frame of the first pack housing comprises:
a first plate on which the cell assembly is seated;
a second plate seated on the seating part of the second pack housing; and
a third plate disposed between the first plate and the second plate to form a cooling flow path.

7. The battery device of claim 6, wherein the second plate of the second pack housing is configured to seal an inner space of the first pack housing by covering an upper portion of the first pack housing.

8. The battery device of claim 1, further comprising a guide assembly configured to guide a relative position of the first pack housing and the second pack housing,
wherein the guide assembly comprises:
a plurality of guide pins fixed to one of the first pack housing and the second pack housing; and
a plurality of guide holes disposed to another one of the first pack housing and the second pack housing.

9. The battery device of claim 8, wherein at least one of the plurality of guide holes has a slot structure extended in a direction in which the plurality of guide pins faces each other.

10. The battery device of claim 8, wherein the plurality of guide pins comprises:
a guide support part that is fit between the first pack housing and the second pack housing;
a pin body protruding from the guide support part and inserted into one of the plurality of guide holes; and
a guide head portion connected to the guide support part and received to a hollow portion provided to one of the first pack housing and the second pack housing.

11. The battery device of claim 1, further comprising:
a second nut coupled to at least one of the plurality of side frames; and
a second bolt inserted into the second nut to fix the battery device to an external structure.

12. The battery device of claim 11, wherein an insertion direction of the second bolt is perpendicular to a stacking direction of the first pack housing and the second pack housing.

13. The battery device of claim 11, wherein the second nut is coupled to at least one of the upper flange and the lower flange of the plurality of side frames.

14. The battery device of claim 1, further comprising a sealing member disposed along an upper surface of at least one of the plurality of side frames to seal a gap between the first pack housing and the second pack housing.

15. The battery device of claim 14, wherein the upper flange further comprises a blocking part protruding in the height direction of the body portion, and
wherein the sealing member is disposed inward of the blocking part, and at least a portion of an area of the sealing member overlaps the body portion in the height direction.
